# EUROPÄISCHE PATENTSCHRIFT

(11) **EP 2 563 624 B1**
(45) Veröffentlichungstag und Bekanntmachung des Hinweises auf die Patenterteilung: **04.03.2015**
(21) Anmeldenummer: 11726676.7
(22) Anmeldetag: 15.04.2011
(51) Int. Cl.: B60R 21/01

(54) **VERFAHREN UND BEFESTIGUNGSVORRICHTUNG ZUR BEFESTIGUNG EINER BAUGRUPPE IN EINER ÖFFNUNG EINER WAND EINES FAHRZEUGS**
METHOD AND FASTENING DEVICE FOR FASTENING AN ASSEMBLY IN AN OPENING OF A WALL OF A VEHICLE
PROCÉDÉ ET DISPOSITIF DE FIXATION DESTINÉ À FIXER UN MODULE DANS UNE OUVERTURE D'UNE PAROI D'UN VÉHICULE

(30) Priorität: 19.05.2010 DE 102010020961; 30.04.2010 DE 102010019093
(43) Veröffentlichungstag der Anmeldung: 06.03.2013
(73) Patentinhaber: Continental Automotive GmbH, 30165 Hannover (DE)
(72) Erfinder: FRANK, Karl-Christian, 93105 Tegernheim (DE)
(74) Vertreter: Büchner, Jörg
(86) Internationale Anmeldenummer: PCT/DE2011/000417
(87) Internationale Veröffentlichungsnummer: WO 2011/134453

(56) Entgegenhaltungen:
- WO-A1-00/71978
- WO-A2-2010/031676
- DE-A1-102007 008 862

## Beschreibung

Die Erfindung betrifft ein Verfahren sowie eine Befestigungsvorrichtung zur Befestigung einer Baugruppe in einer Öffnung einer Wand eines Fahrzeugs.

### Stand der Technik

Bauteile, insbesondere Sensoren (z.B. für Rückhaltesysteme) werden in der Automobilindustrie auf unterschiedliche Weise am Fahrzeug befestigt. Typischerweise werden Befestigungsformen wie Anschrauben, Nieten und Kleben angewendet. Speziell bei Sensoren in sicherheitskritischer Anwendung wie z.B. Airbag-Systemen ist die sichere Montage von entscheidender Bedeutung. Zum einen muss die korrekte Montage bei Verlassen des Werkes sichergestellt sein. Gleichzeitig aber muss der Sensor über die gesamte Lebensdauer, bei Reparaturen und ähnliches ebenfalls sicher in der richtigen Lage und Position montiert bleiben oder sicher austauschbar sein.

Bei heutigen Sensoren, die z.B. per Anschraubung befestigt werden, wird daher in vielen Fällen die Montage dokumentiert. Dies kann z.B. erfolgen, indem beim Anschraubprozess des Sensors Drehmoment und Drehwinkel überwacht und aufgezeichnet werden.

Aus der Druckschrift DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird. Dabei weist die Fahrzeugtür vorzugweise eine zweiteilig Struktur mit einem zum Fahrzeuginneren liegenden Trockenraum und einen zum Außenblech hinweisenden Feuchtraum sowie eine dazwischen liegende Trennwand auf. An dieser Trennwand wird der Luftdrucksensor angeordnet. Einerseits muss dieser die Luftdruckänderungen im Feuchtraum messen, andererseits die elektrischen Komponenten oder zumindest die Stecker und Verkabelung im elektrisch sichereren Trockenraum geführt werden.

Die Trennwand weist dazu eine Öffnung auf, durch welche hindurch entweder der Luftdruck zu einem im Trockenraum angeordneten sogenannten Trockenraumsensor oder eben von einem im Feuchtraum angeordneten Feuchtraumsensor dessen Steckerbereich in den Trockenraum ragt. Durch Anpressen des Befestigungselements wird gleichzeitig die Öffnung in der Trennwand verschlossen.

Aus der DE 10 2006 059 034 B3 ist ein Verfahren zum Anbringen eines Bauteils an einer Wand zu entnehmen, bei dem zunächst eine Einhängelasche des Bauteils in die Wand eingesetzt und danach in einer Kippbewegung zur Wand hin ein Rasthaken des Bauteils über eine geneigte Ebene in die Öffnung der Wand gedrückt wird, bis der Rasthaken die Wand hintergreift. Ein solches Verfahren weist den Nachteil auf, dass die Einhängelasche während der Kippbewegung stark gepresst wird und mit dem Hintergreifen bereits ein Teil der Dichtwirkung wieder verloren geht und die Pressung daher zuvor so stark sein muss, dass die Dichtung bei der Kippbewegung evtl. schon teilweise zerstört werden kann.

Ein weiteres Verfahren sowie eine entsprechende Befestigungsvorrichtung sind beispielsweise aus der DE 10 2008 048 318 bekannt. Anstelle einer Anschraubmontage wird dort eine Bajonettverschlußlösung vorgestellt, bei der im einem Trägerelement drehbar angeordnet ein Halteelement mit zumindest einem, vorzugsweise zumindest zwei Halteflügeln ist, wobei die Halteflügel in einer ersten Drehstellung in die Öffnung der Wand eingeführt, werden können, um eine zur Wand senkrechte Drehachse gedreht werden und in der zweiten Drehstellung die Wand hintergreifen und so Trägerelement, Halteelement und daran befindliche Baugruppe an der Wand befestigen. Dadurch wird eine werkzeugfreie, schnelle und zugleich dennoch sichere Montage möglich. Eine oder mehrere Trägemasen am Trägerelement können ein Mitdrehen des Trägerelements beim Verdrehen verhindert und eine zusätzliche Sperreinheit ein Zurückdrehen des Halteelements nach Erreichen einer vorgegebenen, beispielsweise der vorgesehenen Endposition verhindern. Der bzw. die Halteflügel weisen radial nach außen gerichtet Bereiche unterschiedlicher Dicke auf. In Verbindung mit einem entsprechend angepassten inneren Radius des Lochbildes kann so die Anpressung der Befestigungsvorrichtung an die jeweilige Wandstärke korrigiert werden. Bei einer dicken Wandstärke wird ein großer Radius des Lochbildes gewählt und kommen damit die radial äußeren schmalen Bereiche des Halteflügels zum Einsatz, während die dickeren inneren Bereiche sich in den inneren Radius des Lochbilds erstrecken. Bei einer dünnen Wandstärke wird ein kleinerer Radius gewählt und kommen die dickeren inneren Bereiche zum Einsatz und sorgen somit für eine die dünnere Wandstärke ausgleichende Dicke, so dass die Anpressung annähernd gleich bleibt. Entlang eines Radius sind die Bereiche jedoch gleich dick.. Zudem muss während des Verdrehens das Trägerelement stark angepresst werden, damit die Haltemittel die Wand hintergreifen können. Wird nicht mehr von Hand zusätzlich angepresst, kommt es zu einer Reduzierung der Anpressung.

Am Trägerelement ist dabei ein Dichtelement vorgesehen, welches die Öffnung in der Wand fluiddicht abschließt. Da jedoch bei einer derartigen Montagelösung Haltelement und Bajonettelement zueinander verdreht werden, muss ein entsprechender Spielraum zwischen beiden Elementen vorgesehen werden. In diesem Spielraum kann zumindest bei extremen Temperatureinftüssen, und über die geforderte lange Lebensdauer hinweg nur schwer sichergestellt werden, dass keine Feuchtigkeit eindringt. Wird auf einen solchen Spielraum verzichtet, wird die Dichtung während der Verdrehung um die Mittelachse des Bauteils erheblich durch Reibung belastet, kann sich Abrieb bilden oder gar die Dichtung verdrehen und damit undicht werden.

Befestigungsvorrichtung zur Befestigung einer Baugruppe (1) in einer Öffnung einer Wand (51) eines Fahrzeugs, wobei die Befestigungsvorrichtung folgende Merkmale aufweist:
- ein Trägerelement (50,56) zur Auflage an der Wand (51); und
- ein Halteelement (54) mit zumindest einem Halteflügel (52,53) zum Befestigen der Befestigungsvorrichtung in der Öffnung der Wand (51), wobei das Halteelement (54) zur Befestigung der Befestigungsvorrichtung gegenüber dem Trägerelement (50,56) entlang einem vorgegebenen Drehweg drehbar angeordnet ist (Abs. 3),
- wobei
- zwischen Trägerelement (50,56) und Halteelement (54) ein Dichtungselement (55) angeordnet ist,
- und Trägerelement (50,56) und Halteelement (54) und Dichtungselement (55) so zueinander ausgestaltet sind, dass
- in einem ersten Abschnitt des Drehweges ein Spielraum zwischen Trägerelement (50,56) und Halteelement (54) verbleibt und
- zumindest am Ende des Drehweges das Trägerelement (50,56) und Halteelement (54) sich so relativ zum Dichtungselement (55) bewegt bzw. bewegen, dass der Spielraum geschlossen und das Dichtungselement (55) zwischen Trägerelement (50,56) und Halteelement (54) dichtend zusammengepresst wird.

Die Aufgabe der vorliegenden Erfindung ist es daher, dass Eindringen von Feuchtigkeit zu verhindern.

Diese Aufgabe wird durch die Merkmale der unabhängigen Ansprüche gelöst. Vorteilhafte Weiterbildungen der Erfindung ergeben sind aus den Unteransprüchen, wobei auch Kombinationen und Weiterbildungen einzelner Merkmale miteinander denkbar sind.

Ein wesentlicher Gedanke der Erfindung besteht darin, dass gattungsbildende Verfahren sowie die entsprechende Befestigungsvorrichtung entsprechend weiterzuentwickeln. Dazu wird zwischen Trägerelement und Halteelement ein Dichtungselement angeordnet. Eine den Spielraum voll ausfüllende Dichtung hätte aber den großen Nachteil, dass diese während der Drehbewegung einerseits als zusätzlicher Reibwiderstand die Verdrehung deutlich erschweren und zudem die Dichtung beim Verdrehen eventuell soweit verformt oder an den Oberflächen aufgerieben wird, dass sich Risse, Abreibungen Brüche oder auch nur Materialermüdungen und dergleichen bilden, die zumindest über die lange Lebensdauer und Temperaturschwankungen hinweg zu einem Nachlassen oder gar Wegfall der Dichtwirkung führen.

Erfindungsgemäß ist daher die Befestigungsvorrichtung und das Verfahren so ausgestaltet, dass zwar eine Dichtung vorgesehen, über den Drehweg hinweg in einem ersten Abschnitt aber noch ein Spielraum zur Dichtung hin verbleibt und dieser erst im letzten Abschnitt des Drehweges, vorzugweise an dessen Ende geschlossen und in dieser Position das Dichtungselement zwischen Trägerelement und Halteelement dichtend zusammengepresst wird. Der erste Wegabschnitt dient dabei also dem Fixieren der Befestigungsvorrichtung an der Wand durch Hintergreifen, der letzte Wegabschnitt dem Schließen der Dichtung.

Die Begriffe Trägerelement und Halteelement sind dabei identisch zu der Anmeldung DE 10 2008 0 48 318 A1 verwendet worden. Das Trägerelement kennzeichnet dabei dasjenige Teil, welches bei der Montage an der Wand im Wesentlichen unbeweglich ist, wohingegen das Halteelement dasjenige Teil, welches bei der Befestigung an der Wand gegenüber dem Trägerelement verdreht wird und dessen Halteflügel die Wand hintergreifen. Die Drehung erfolgt um die Mittelachse des Bauteils, die senkrecht zu der Ebene ist, welche durch die Wand definiert ist.

Das Trägerelement, Halteelement und dazwischen befindliche Dichtungselement so dabei in ihren Abmaßen zueinander abhängige Elemente. Um die funktionale Wirkung sicherzustellen, ist grundsätzlich die entsprechende Anpassung eines Elementes an die anderen zwei Elemente denkbar und für die Erfüllung der erfindungsgemäßen Wirkung hinreichend und die dementsprechend begrifflich durch die und/oder- Verbindung in Anspruch ausgedrückt. So ist für die Erfindung des Weiteren unerheblich, ob das Dichtungselement zwischen Trägerelements und Halteelement an sich frei liegend oder mit einem dieser beiden Elemente mechanisch verbunden, beispielsweise dort angespritzt ist.

So kann der für die Verdrehung im ersten Abschnitt erforderliche Spielraum eben sowohl zwischen Dichtungselement und Trägerelement oder alternativ zwischen Dichtungselement und Halteelement ausgebildet sein, wie wiederum im Anspruch durch die und/oder- Verbindung zum Ausdruck gebracht werden soll. Es ist also unerheblich, ob sich die Dichtung bereits im ersten Wegabschnitt mitdreht, solange eben dies noch bei vorliegendem Spielraum zur gegenüberliegenden Seite und damit ohne Reibung erfolgt.

In einem ersten Abschnitt des Drehweges verbleibt ein Spielraum zwischen Trägerelement und/oder Halteelement und/oder Dichtungselement. Dieser Spielraum kann sowohl in axialer als auch in radialer Richtung ausgebildet sein.

Zumindest am Ende des Drehweges bewegen sich das Trägerelement und das Halteelement oder eines der beiden sich so relativ zum Dichtungselement, dass der Spielraum geschlossen und das Dichtungselement zwischen Trägerelement und Halteelement dichtend zusammengepresst wird.

Es ist dabei unerheblich, ob sich beide Elemente bewegen oder nur eines relativ zum anderen, sofern nur die Bewegung hinreichend ist, um den Spielraum zu schließen und diesen durch die Dichtung abzudichten.

Trägerelement und Halteelement weisen in erfindungsgemäßen Ausgestaltung zueinander geformte radial verlaufende, also mit gleichem Abstand zur Mittelachse versehene Randabschnitte auf. Als Randabschnitte sind dabei die Berührungsstellen zu verstehen, an denen sich Trägerelement und Halteelement während des Drehweges berühren. Trägerelement und Halteelement liegen somit am Randabschnitt permanent aufeinander auf. Die Randabschnitte weisen in einem ersten Abschnitt des Drehweges im Bereich des Dichtungselements einen ersten axialen Abstand von Trägerelement zu Halteelement auf und ist dieser erste axiale Abstand größer als das axiale Maß des Dichtungselements, so dass ein entsprechender Spielraum für einen leichtgängiges und insbesondere das Dichtungselement nicht belastendes Verdrehen in diesem ersten Wegabschnitt gegeben ist.

Am Ende des Drehweges ist zumindest an einem der Randabschnitte eine Einbuchtung in axiale Richtung vorgesehen, so dass sich das Halteelement in axiale Richtung relativ zum Dichtelement bewegt und der dabei verbleibende zweite axiale Abstand von Trägerelement zu Halteelement im Bereich des Dichtungselements kleiner als das axiale Maß des Dichtungselements ist. Das Dichtungselement wird also primär axial verpresst, wobei es denkbar ist, dass das Dichtungselement dabei durch seine Verformung auch radial den Spielraum zwischen Trägerelement und Halteelement ausfüllt und verschließt. Für die Dichtwirkung ist aber zunächst die axiale Verpressung entscheidend.

Am Trägerelement ist in einer bevorzugten Ausgestaltung ein zweites Dichtungselement zur Wand hin mit Elastizität in axialer Richtung vorgesehen. Ein solches Dichtungselement ist grundsätzlich im Stand der Technik bereits bekannt. In der hier vorliegenden Ausgestaltung jedoch tritt eine besondere funktionale Wirkung ein, die auch eine entsprechende Dimensionierung dieses 2. Dichtungselement erfordert. So wird dieses zweite Dichtungselement in axiale Richtung gepresst, indem durch die Halteflügel des Halteelements aber das Halteelement, über dieses das Trägerelement und über dieses wiederum die zweite Dichtungselement soweit gegen die Wand gedrückt wird, dass auch die zweite Dichtung die Öffnung in der Wand fluiddicht abdichtet. Jedoch wird am Ende des Drehweges durch die axiale Bewegung des Halteelements teilentlastet.

In einer weiteren bevorzugten Ausgestaltung dabei vorgesehen, dass ein zweiter Teil des Drehwegs noch vor dem Ende des Drehwegs ausgebildet ist, innerhalb dem der Halteflügel die Wand bereits hintergreift und die zweite Dichtelement axial gegen die Wand verspannt, so dass das 2. Dichtelement bereits verspannt ist, bevor am Ende des Drehwegs das axiale Nachrutschen des Halteelements zum Schließen der 1. Dichtung erfolgt. Der erste Teil des Drehwegs beträgt jedoch vorzugsweise zumindest die Hälfte des Drehwegs.

Vorzugsweise weisen das Trägerelement und/oder das Halteelement zumindest eine Sperreinheit auf, die ausgebildet ist, um das Halteelement nach Erreichen des Endes des Drehweges in dieser Position zu halten.

In dem in einer bevorzugten Ausgestaltung die Halteflügel in Drehrichtung zur Endposition der Befestigung hin in radiale Richtung eine zunehmende Dicke aufweisen, kann erreicht werden, dass die Anpresskraft über den Verlauf des Drehweges erhöht, insbesondere auch das nachlassende Anpresskraft aufgrund der axialen Verschiebung des Halteelements beim Erreichen des Endes des Drehweges und der dort vorgesehenen Einbuchtung durch die Dicke des Halteflügels wieder zumindest teilweise kompensiert wird.

Die Erfindung wird nun nachfolgend anhand von Ausführungsbeispielen unter Zuhilfenahme der Figuren näher erläutert. In den Figuren werden immer Ansichten genau eines Ausführungsbeispiels in den unterschiedlichen Positionen und mit unterschiedlichen Einschnitten zur Darstellung der Funktionsweise im Inneren dargestellt. Die anspruchsgemäße Lehre definiert sich jedoch durch die Patentansprüche und ist nicht allein beschränkt auf dieses eine Ausführungsbeispiel zu verstehen.

Im Folgenden können für funktional gleiche und/oder gleiche Elemente mit den gleichen Bezugsziffern bezeichnet sein. Zudem wurde versucht, die Bezugsziffern hierarchisch zu ordnen und gibt die 1. Stelle eine Bezugsziffer immer der zugehörige Gesamtelement an.

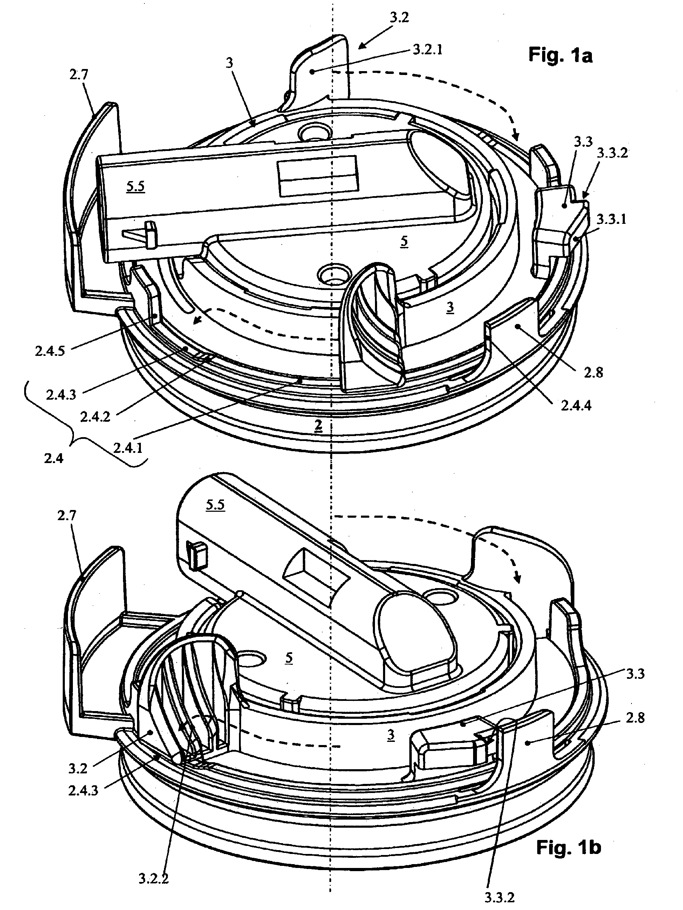

Die Figuren 1-5 zeigen jeweils als Figur a) die Anfangsposition, in der also die Befestigungsvorrichtung in die Wand eingeführt wird und als Figur b) die Position, in der also die Befestigungsvorrichtung an der Wand befestigt und Wand wie auch die Befestigungsvorrichtung selbst fluiddicht sind. Dies vorangestellt sind die Figuren mithilfe der beiliegenden Bezugszeichenliste weitgehend selbsterklärend Ergänzend wird ausdrücklich auf die teilweise bereits in der gattungsbildenden Anmeldung DE 10 2008 048 318 A1 beschriebenen Teile und Funktionen Bezug genommen.

Es zeigen:
- Figur 1:: dreidimensionale Ansicht der Befestigungsvorrichtung mit eingesetztem Sensor in Anfangs- und Endposition
- Figur 2:: erste Seitenansicht mit teilweisen Einschnitten zur Darstellung funktionswesentliche Teile im Inneren
- Figur 3:: Detailansicht
- Figur 4:: zweite Seitenansicht mit teilweisen Einschnitten zur Darstellung funktionswesentliche Teile im Inneren
- Figur 5:: dreidimensionale Ansicht der Befestigungsvonichtung eingesetzt in die Wand vom Feuchtraum aus betrachtet

Figur 1 zeigt in einer dreidimensionalen Ansicht die Befestigungsvorrichtung mit einem in das Halteelement 3 eingesetzten Sensorelement 5 und dem Trägerelement 2. Im vorliegenden Beispiel sind das Trägerelement 2 und alle damit verbundenen Teilelemente dieses Trägerelements lagefest, werden also in der vorgegebenen Ausrichtung an die Wand angebracht und das Halteelement 3 demgegenüber entsprechend dem gezeigten Drehweg in die Endposition verdreht. Strichpunktiert dargestellt ist dabei die Drehachse, um die das Halteelement 3 in Trägerelement 2 gedreht und insbesondere am Ende des Drehweges auch in axiale Richtung, also in Richtung dieser Achse verschoben wird. Die Drehachse ist senkrecht zur Wand und entspricht der Mittelachse bzw. Symmetrieachse des im Wesentlichen rotationssymmetrischen Grundkörpers. Der Drehweg besteht somit aus einem im wesentlichen rotatorischen Abschnitt, also in tangentialer Richtung, in dem das Halteelement 3 gegenüber dem Trägerelement 2 um die strich-punktierte Mittelachse verdreht wird und einem im wesentlichen translatorischen Abschnitt, also in axiale Richtung, in dem das Halteelement 3 tiefer in das Trägerelement 2 eindringt, wie nachfolgend noch ausführlicher erläutert werden wird.

Die Figur 1 zeigt noch nicht die Wand 1 und die darin befindlichen Öffnungen, da diese die durch die Befestigungsvorrichtung verdeckt würden. Gut zu erkennen ist in Figur 1 der Randabschnitt 2.4, welcher den Verdrehweg und den axialen Abstand zwischen Trägerelement 2 und Halteelement 3 in einem im Inneren befindlichen und daher in Figur 1 nicht erkennbaren Hohlraum bestimmt. Der Randabschnitt 2.4 weist einen 1. Wegabschnitt auf, welcher eben ist. In einem nachfolgenden Wegabschnitt 2.4.2 wird über eine vorzugsweise geneigte Ebene der axiale Abstand reduziert und das Halteelement ist letztlich in die Einbuchtung 2. 4. 3 herabgesetzt.

Am Trägerelement 2 ist darüber hinaus eine Steckerblende 2.7 ausgebildet, welche verhindert, dass der elektrische Steckkontakt 5.5 der Sensorbaugruppe 5 bereits kontaktiert werden kann, wenn die Befestigungsvorrichtung noch nicht in ihre Endposition gedreht ist. Darüber hinaus weist das Trägerelement 2 einen Rückdrehsicherungslappen 2.8 auf, welche im vorgegebenen Maße radiale nach außen biegsam ausgestaltet ist, um von einem Rückdrehsicherungshaken 3.3 dessen schräg verlaufende geneigter Seite 3.3.1 zunächst Überfahren werden zu können, nachfolgend aber zurückschnappen und einem auf der Rückseite des Rückdrehsicherungshakens 3.3 befindlichen Anschlagsegment 3.3.2 ausreichenden Widerstand leisten zu können.

Figur 1 zeigt darüber hinaus das Halteelement 3 mit seinen vorzugsweise 2 um 180° versetzten Drehtlügeln 3.2, die vorzugsweise fingerkuppenartig geformt sind und so eine werkzeugfreie Montagen ermöglichen. Zudem weisen die Drehflügel eine leicht schräge Gesamtangriffsfläche auf, so dass bei einer natürlichen Drehbewegung ein Teil der eingeprägten Kraft in axiale Richtung ein Anpressen der Befestigungsvorrichtung an die Wand mit sichergestellt wird.

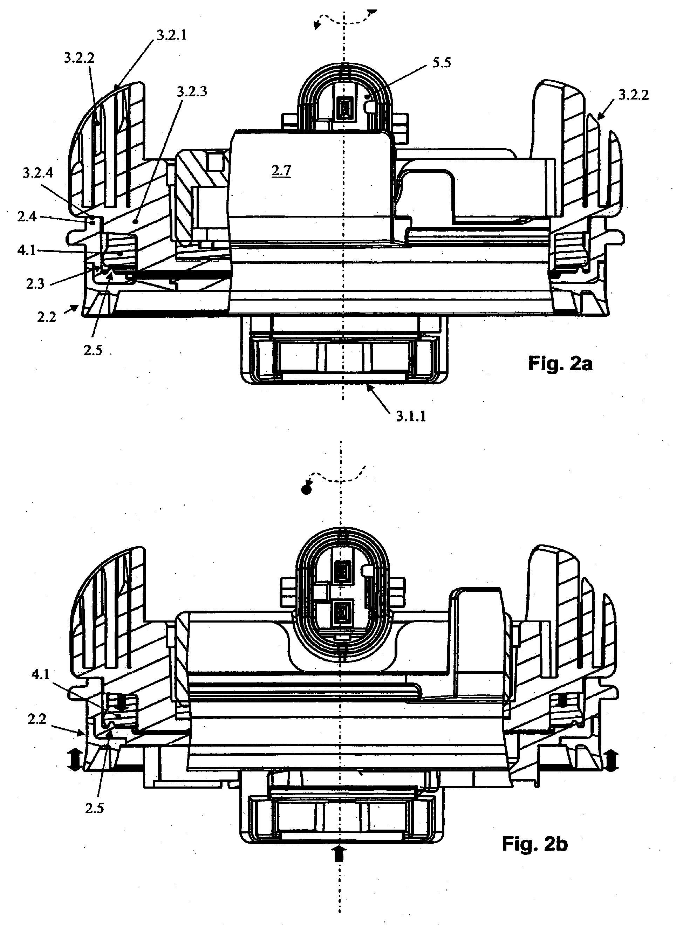

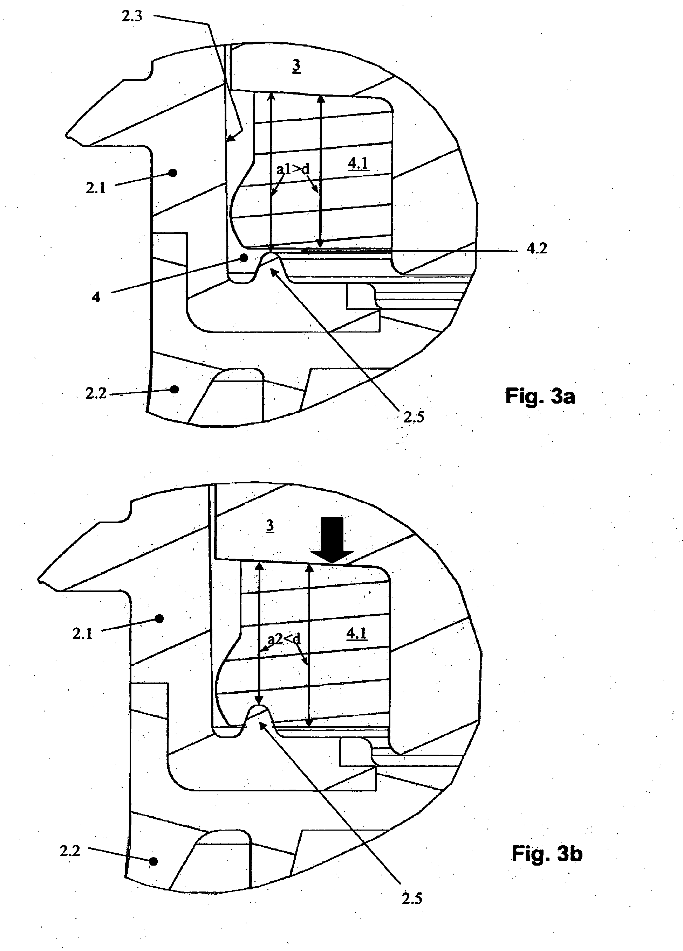

Die Figuren 2a und 2b zeigen nun eine Seitenansicht der Befestigungsvorrichtung mit teilweisen Einschnitten, die einen Einblick ins Innere und das Erfindung wesentliche Dichtelement 4.1 im Hohlraum 4 näher zeigen. Da dies jedoch in den Detailansichten in Figur 3 noch besser vergrößert dargestellt wird, soll zunächst bezugnehmend auf Figur 2 auf andere Details eingegangen werden. So zeigt Figur 2 gut die geringe Kontaktfläche zwischen dem Randabschnitt 2.4 und der diese berührenden Unterseite 3.2.4 der Drehflügel 3.2. Diese geringe Kontaktfläche ist entscheidend dafür, dass ein möglichst geringer Reibwiderstand beim Verdrehen dies Halteelements 3 in Trägerelement 2 auftritt.

Figur 2 zeigt zudem gut den Übergang vom Halteelement 3 in die damit einstückig ausgebildeten Drehflügel 3.2, welche aus dem Halteelement 3 sowohl axial nach oben stehend als auch radial nach außen stehend ausgebildet und so einen in etwa "L"-förmigen Übergangsbereich bilden, der stark genug ist, um die Drehkräfte vom Drehflügel 3.2 an das restliche Halteelement 3 weiterzugeben.

Figur 3 zeigt nun im Detail den Hohlraum 4 zwischen dem Trägerelement 2 und im Halteelement 3, wobei der Hohlraum 4 durch entsprechende Ausformungen am Trägerelement 2 und Halteelement 3 entsteht und in diesem Hohlraum 4 das Dichtungselement 4.1 angeordnet ist, wobei für die Erfindung völlig unerheblich ist, ob das Dichtungselement 4.1 frei liegend ausgestaltet ist, am Trägerelement befestigt oder wie hier gezeigt vorzugsweise am Halteelement 3 angespritzt ausgestaltet ist.

Wichtig und in Figur 3a) gut zu erkennen ist der erste axiale Abstand a1 von Trägerelement 2 zu Halteelement 3, welcher größer als das axiale Maß d des Dichtungselements 4.1 ist, also gilt a1>d. Es bildet sich also ein Spielraum 4.2, der zwar nur einige Mikrometer oder Millimeter groß ist, jedoch eben ausreicht, um das Halteelement 3 gegenüber den Trägerelement 2 verdrehen zu können, ohne dass dabei das Dichtungselement 4.1 durch Reibung belastet oder gar zerstört wird. Zudem ist die Verdrehung so in diesem 1. wegabschnitt sehr leicht gängig.

Wie nun Figur 3b) im Vergleich dazu verdeutlicht, bewegt sich bei Erreichen der Endposition das Halteelement (3) in axiale Richtung relativ zum Dichtelement (4.1) derart, dass der dabei verbleibende zweite axiale Abstand a2 von Trägerelement (2) zu Halteelement (3) im Bereich des Dichtungselements (4.1) kleiner als das axiale Maß des Dichtungselements (a2<d) ist.. Dadurch wird das Dichtungselement 4.1 axial gepresst und der Hohlraum 4 abgedichtet. In der hier gezeigten bevorzugten Ausgestaltung ist am Trägerelement 2 zumindest eine hervorstehende Ausformung 2.5 in Richtung des Dichtungselements 4.1 vorgesehen ist, welche am Ende des Drehwegs in axialer Richtung in das Dichtungselement 4.1 eindringt. Ergänzend oder alternativ ginge auch eine Ausformung am Halteelement 3. im Gegensatz zu einer großflächigen Anpressung weist ein solches Einschneiden einer Ausformung 2.5 in das Dichtelement 4.1 eine besonders gute Abdichtung auf und kann zudem eine radiale Verformung des Dichtungselements 4.1 nach innen oder außen, hier beispielsweise insbesondere nach außen bewirken und den ihr bestehenden Hohlraum 4 mit ausfüllen.

Wichtig für das Verständnis ist dabei, dass dieser axiale Abstand a1 bzw. a2 durch die Randabschnitte 2.4 am Trägerelement 2 und 3.2.4 am Halteelement 3 bewirkt werden und die axiale Absenkung des Halteelements 3 durch das Einlaufen des Drehflügels 3.2 in die Einbuchtung 2.4.3 erfolgt.

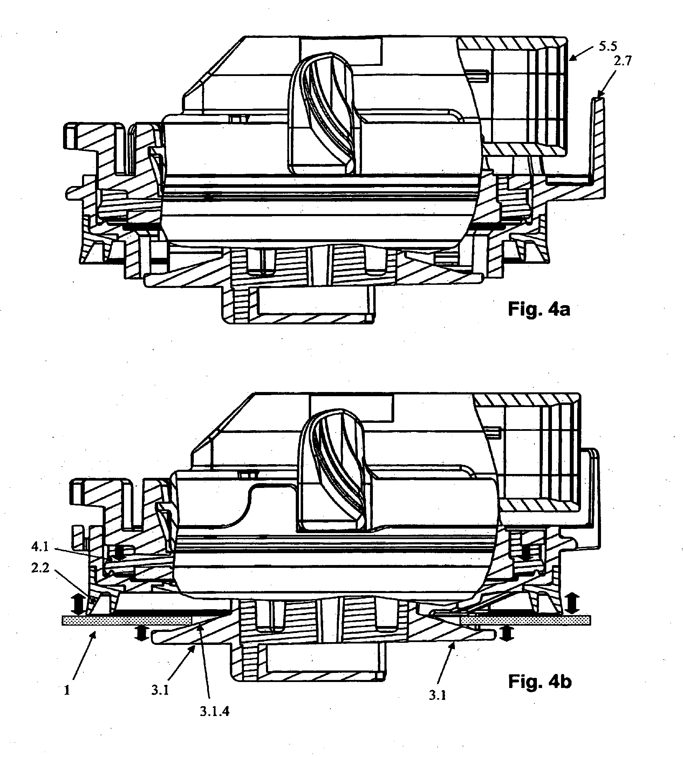

Wie Figur 4 zeigt in einer weiteren Schnittdarstellung die Befestigungsvorrichtung in derjenigen Seitenansicht, in welcher man die auf der Unterseite befindlichen Halteflügel 3.1 gut erkennen kann. Diese Halteflügel 3.1 weisen eine radial nach außen abnehmende Dicke auf, mit der im Zusammenspiel mit dem abweichenden Lochdurchmesser des inneren kreisförmigen Öffnungsbereichs 1.1.1 ein Ausgleich der Dicke der Wand 1 möglich ist. Die grundsätzliche Funktionsweise dieser Befestigungsvorrichtung mit den Halteflügeln 3.1 ist der bereits in der gattungsbildenden Anmeldung hinreichend beschrieben. Der bzw. die Halteflügel 3.1 des Halteelements hintergreifen zumindest am Ende des Drehweges die Wand 1 und das Halteelement 3 und drücken über dieses das Trägerelement 2 axial gegen die Wand 1.

Zudem ist in diesem Ausführungsbeispiel am Trägerelement 2 ein zweites Dichtungselement 2.2 zur Wand 1 hin mit Elastizität in axialer Richtung vorgesehen.

Dieses zweite Dichtungselement 2.2 wird in axiale Richtung gegen die Wand 1 gepresst und drückt gleichzeitig das Trägerelement 2 leicht von der Wand 1 ab, wie durch den Doppelpfeil skizzenhaft angedeutet werden soll. Durch die Halteflügel 3.1 des Halteelements wird aber das Halteelement 3, über dieses das Trägerelement 2 und über dieses wiederum die zweite Dichtungselement 2.2 noch soweit gegen die Wand gedrückt, dass auch die zweite Dichtungselement 2.2 die Öffnung 1.1 in der Wand fluiddicht abdichtet. Am Ende des Drehweges wird das 2. Dichtungselement 2.2 durch die axiale Bewegung des Halteelements 3 teilentlastet.

Vorzugsweise ist aber das 2. Dichtungselement 2.2 bereits vorher in einem 2. Teil des Drehwegs noch vor dem Ende des Drehwegs bereits axial gegen die Wand 1 verspannt und wirkt so zusätzlich ausgleichend auf dieses axiale Einrücken des Halteelements 3.

In einer weiteren vorteilhafte Ausgestaltung sind die Halteflügel 3.1 auf ihrer Innen zur Wand gerichteten Seite 3.1.4 in Drehrichtung zur Endposition der Befestigung hin in radiale Richtung eine zunehmende Dicke ausgestaltet, so dass der Anpressdruck in Endposition noch mal zunimmt und so zu einer weiteren Kompensation der axialen Verschiebung des Halteelements 3 führt.

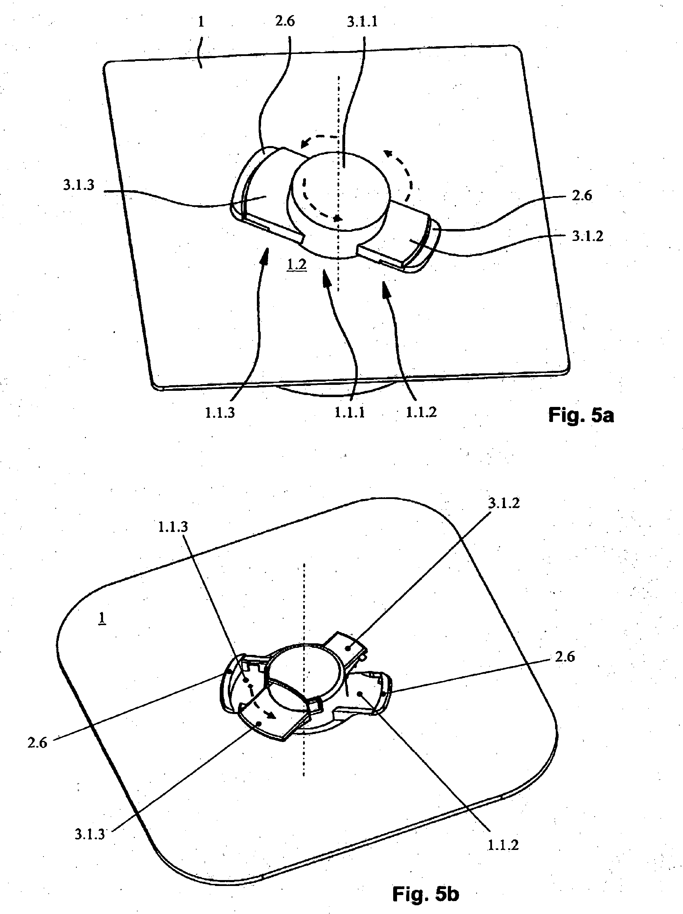

Die Figur 5 zeigt nun noch aus dem Blickwinkel des Feuchtraums die Ansicht auf die Wand 1 mit der in die Öffnung 1.1 zunächst nur eingeführten Befestigungsvorrichtung Wie aus dem Zusammenspiel der Figuren 5a und 5b deutlich wird, sorgen die Trägemasen 26 des Trägerelements 2 dafür, dass sich das Trägerelement 2 während der verdrehen des Halteelements 3 nicht Mitdrehen kann nur die Halteflügel 3.1 verdreht werden und die Wand in der Randzone 1.2 hintergreifen. Wie bereits in der gattungsbildenden Anmeldung ausgeführt, sind die Halteflügel 3.1.2 und 3.1.3 unterschiedlich breit ausgeführt und weist die Öffnung 1.1 dementsprechend unterschiedlich breite Öffnungsbereiche 1.1.2 und 1.1.3 auf, wodurch eine eindeutige Montage Richtung sichergestellt wird.

### Bezugszeichenliste

- 1: Wand
- 1.1: Öffnung
- 1.1.1: innerer kreisförmiger Öffnungsbereich
- 1.1.2: Öffnungsbereich für den schmaleren Halteflügel
- 1.1.3: Öffnungsbereich für den breiteren Halteflügel
- 1.2: Randzone der Wand um die Öffnung, in der die Halteflügel hintergreifen
- 2: Trägerelement
- 2.1: Trägergrundkörper
- 2.2: Dichtelement am Trägerelement zur Wand hin
- 2.3: Aussparung für Dichtelement und Spielraum
- 2.4: Randabschnitt am Trägerelement
- 2.4.1.: erster Wegabschnitt auf dem Randabschnitt
- 2.4.2.: zweiter Wegabschnitt auf dem Randabschnitt
- 2.4.3.: Einbuchtung auf dem Randabschnitt
- 2.4.4.: Anfangsanschlag am Randabschnitt
- 2.4.5.: Endanschlag am Randabschnitt
- 2.5: Ausformung am Trägerelement zum inneren Dichtungselement zwischen Trägerelement und Halteelement
- 2.6: Trägernasenam Trägerelement
- 2.7: Steckbereichsblende
- 2.8: Rückdrehsicherungslappen
- 3: Halteelement
- 3.1: Halteflügel
- 3.1.1.: zentraler Verbindungsbereich mit Spritzschutz für Kanal in der Sensorbaugruppe
- 3.1.2.: schmalerer Halteflügel
- 3.1.3.: breiterer Halteflügel
- 3.1.4.: Innenseite der Halteflügel zur Wand hin
- 3.2: Drehflügel
- 3.2.1.: Wand des Drehflügels
- 3.2.2.: Versteifungsstege am Drehflügel
- 3.2.3.: Übergangsbereich vom Drehflügel zum restlichen Halteelement
- 3.2.4.: Kontaktbereich des Drehflügels zum Randabschnitt
- 3.3: Rückdrehsicherungshaken
- 3.3.1: Rampensegment am Rückdrehsicherungshaken
- 3.3.2: Anschlagsegment am Rückdrehsicherungshaken
- 4: Veränderlicher Hohlraum zwischen Trägerelement und Halteelement
- 4.1: Dichtelement im Hohlraum
- 4.2: Spielraum im Hohlraum, solange nicht das Ende des Drehweges erreicht ist
- 5: Sensorbaugruppe
- 5.1: Sensorelement
- 5.2: Schaltungsträger mit Sensorelement und weiteren Bauelementen
- 5.3: Druckkanal
- 5.4: Dichtelement zwischen Druckkanal und Schaltungsträger oder Sensorelement
- 5.5: Elektrischer Steckkontakt
- -·-·: Drehachse

## Patentansprüche

1. Befestigungsvorrichtung zur Befestigung einer Baugruppe (5) in einer Öffnung (1.1) einer Wand (1) eines Fahrzeugs, wobei die Befestigungsvorrichtung folgende Merkmale aufweist:
a) ein Trägerelement (2) zur Auflage an der Wand (1); und
b) ein Halteelement (3) mit zumindest einem Halteflügel (3.1) zum Befestigen der Befestigungsvorrichtung in der Öffnung (1.1) der Wand, wobei das Halteelement (3) zur Befestigung der Befestigungsvorrichtung gegenüber dem Trägerelement (2) entlang einem vorgegebenen Drehweg drehbar angeordnet ist, wobei
c) zwischen Trägerelement (2) und Halteelement (3) ein Dichtungselement (4.1) angeordnet ist,
d) und Trägerelement (2) und/oder Halteelement (3) und/oder Dichtungselement (4.1) so zueinander ausgestaltet sind, dass
e) in einem ersten Abschnitt des Drehweges ein Spielraum (4.2) verbleibt und zwar entweder:
e1) zwischen Trägerelement (2) und Dichtungselement (4.1) oder
e2) Halteelement (3) und Dichtungselement (4.1) oder
e3) zwischen Trägerelement (2) und Dichtungselement (4.1) auf der einen Seite der Dichtung und Halteelement (3) und Dichtungselement (4.1) auf der anderen Seite der Dichtung
f) zumindest am Ende des Drehweges das Trägerelement (2) und/oder Halteelement (3) sich so relativ zum Dichtungselement (4.1) bewegt bzw. bewegen, dass der Spielraum (4.2) geschlossen und das Dichtungselement (4.1) zwischen Trägerelement (2) und Halteelement (3) dichtend zusammengepresst wird und zwar dadurch, dass
f1) Trägerelement (2) und Halteelement (3) zueinander geformte Randabschnitte (2.4, 3.2.4) aufweisen, an denen sich Trägerelement (2) und Halteelement (3) während des Drehweges berühren und
f2) die Randabschnitte in einem ersten Abschnitt des Drehweges im Bereich des Dichtungselements (4.1) einen ersten axialen Abstand (a1) von Trägerelement zu Halteelement aufweisen und dieser erste axiale Abstand größer als das axiale Maß des Dichtungselements (a1>d) ist, und
f3) am Ende des Drehweges zumindest an einem der Randabschnitte eine Einbuchtung (2.4.3) in axiale Richtung vorgesehen ist, so dass sich das Halteelement (3) in axiale Richtung relativ zum Dichtelement (4.1) bewegt und der dabei verbleibende zweite axiale Abstand (a2) von Trägerelement (2) zu Halteelement (3) im Bereich des Dichtungselements (4.1) kleiner als das axiale Maß des Dichtungselements (a2<d) ist.

2. Befestigungsvorrichtung gemäß Anspruch 1, **dadurch gekennzeichnet, dass** der bzw. die Halteflügel (3.1) des Halteelements zumindest am Ende des Drehweges die Wand (1) hintergreifen und das Halteelement (3) und über dieses das Trägerelement (2) axial gegen die Wand (1) drücken.

3. Befestigungsvorrichtung gemäß Anspruch2, **dadurch gekennzeichnet, dass**
a) am Trägerelement (2) ein zweites Dichtungselement (2.2) zur Wand (1) hin mit Elastizität in axialer Richtung vorgesehen ist und
b) dieses zweite Dichtungselement (2.2) in axiale Richtung gepresst wird und am Ende des Drehweges durch die axiale Bewegung des Halteelements (3) teilentlastet wird,
c) durch die Halteflügel (3.1) des Halteelements aber das Halteelement (3), über dieses das Trägerelement (2) und über dieses wiederum die zweite Dichtungselement (2.2) noch soweit gegen die Wand gedrückt wird, dass auch die zweite Dichtungselement (2.2) die Öffnung (1.1) in der Wand fluiddicht abdichtet.

4. Befestigungsvorrichtung gemäß einem der vorangehenden Ansprüche, **dadurch gekennzeichnet, dass** ein zweiter Teil des Drehwegs noch vor dem Ende des Drehwegs ausgebildet ist, innerhalb dem der Halteflügel (3.1) die Wand (1) bereits hintergreift und die zweite Dichtelement (2.2) axial gegen die Wand (1) verspannt.

5. Befestigungsvorrichtung gemäß einem der vorangehenden Ansprüche, **dadurch gekennzeichnet, dass** das Trägerelement und/oder das Halteelement zumindest eine Sperreinheit aufweisen, die ausgebildet ist, um das Halteelement nach Erreichen des Endes des Drehweges in dieser Position zu halten.

6. Befestigungsvorrichtung gemäß einem der vorangehenden Ansprüche, **dadurch gekennzeichnet, dass** die Halteflügel (3.1) in Drehrichtung zur Endposition der Befestigung hin in radiale Richtung eine zunehmende Dicke aufweisen.

7. Befestigungsvorrichtung gemäß einem der vorangehenden Ansprüche, **dadurch gekennzeichnet, dass** am Trägerelement (2) und/oder am Halteelement (3) zumindest eine vorstehende Ausformung (2.5) in Richtung des Dichtungselements (4.1) vorgesehen ist, welche am Ende des Drehwegs in axialer Richtung in das Dichtungselement (4.1) eindringt.

8. Sensorelement, insbesondere Luftdrucksensor (5), mit einer Befestigungsvorrichtung gemäß einem der vorangehenden Ansprüche.

9. Verfahren zur Befestigung einer Baugruppe (5) in einer Öffnung (1.1) einer Wand (1) eines Fahrzeugs mittels einer Befestigungsvorrichtung gemäß einem der vorangehenden Ansprüche.

## Claims

1. A fastening device for fastening an assembly (5) in an opening (1.1) of a wall (1) of a vehicle, wherein the fastening device has the following features:
a) a support element (2) to be placed on the wall (1); and
b) a retaining element (3) having at least one retaining wing (3.1) for fastening the fastening device in the opening (1.1) of the wall, the retaining element (3) for fastening the fastening device being arranged so as to be rotatable relative to the support element (2) along a predetermined path of rotation, wherein
c) a sealing element (4.1) is interposed between the support element (2) and the retaining element (3),
d) and the support element (2) and/or retaining element (3) and/or sealing element (4.1) are designed relative to one another such that
e) in a first section of the path of rotation, play (4.2) is left either:
e1) between the support element (2) and the sealing element (4.1), or
e2) the retaining element (3) and the sealing element (4.1), or
e3) between the support element (2) and the sealing element (4.1) on one side of the seal and the retaining element (3) and the sealing element (4.1) on the other side of the seal
f) at least at the end of the path of rotation, the support element (2) and/or the retaining element (3) move(s) relative to the sealing element (4.1) such that the play (4.2) is closed and the sealing element (4.1) is sealingly compressed between the support element (2) and the retaining element (3) as a result of
f1) the support element (2) and the retaining element (3) having edge sections (2.4, 3.2.4) formed so as to face one another, with which the support element (2) and the retaining element (3) have contact during the path of rotation, and
f2) the edge sections having a first axial distance (a1) from the support element to the retaining element in a first section of the path of rotation in the area of the sealing element (4.1), and said first axial distance being greater than the axial dimension of the sealing element (a1>d), and
f3) a notch (2.4.3) being provided in the axial direction at the end of the path of rotation on at least one of the edge sections, so that the retaining element (3) moves in the axial direction relative to the sealing element (4.1) and the remaining second axial distance (a2) from the support element (2) to the retaining element (3) is smaller than the axial dimension of the sealing element (a2<d) in the area of the sealing element (4.1).

2. The fastening device according to Claim 1, **characterized in that** the retaining wing(s) (3.1) of the retaining element engage(s) the wall (1) at least at the end of the path of rotation and press(es) the retaining element (3) and, by means of the latter, the support element (2) axially against the wall (1).

3. The fastening device according to Claim 2, **characterized in that**
a) a second sealing element (2.2) facing towards the wall (1) and having elasticity in the axial direction is provided on the support element (2), and
b) this second sealing element (2.2) is pressed in the axial direction and is partially relieved by the axial movement of the retaining element (3) at the end of the path of rotation,
c) the retaining wings (3.1) of the retaining element, however, press the retaining element (3) and, by means of the latter, the support element (2) and, again by means of the latter, the second sealing element (2.2) so far against the wall that the second sealing element (2.2) also seals the opening (1.1) in the wall such that it is fluid-tight.

4. The fastening device according to any one of the preceding claims, **characterized in that** a second part of the path of rotation is formed before the end of the path of rotation, inside which the retaining wing (3.1) already engages the wall (1) and braces the second sealing element (2.2) axially against the wall (1).

5. The fastening device according to any one of the preceding claims, **characterized in that** the support element and/or the retaining element have/has at least one locking unit which is designed so as to hold the retaining element in its position after reaching the end of the path of rotation.

6. The fastening device according to any one of the preceding claims, **characterized in that**, in the radial direction, the retaining wings (3.1) increase in thickness in the direction of rotation towards the end position of the fastening.

7. The fastening device according to any one of the preceding claims, **characterized in that**, on the support element (2) and/or on the retaining element (3), at least one projecting formed part (2.5) is provided in the direction of the sealing element (4.1), which penetrates the sealing element (4.1) in the axial direction at the end of the path of rotation.

8. A sensor element, in particular an air pressure sensor (5), having a fastening device according to any one of the preceding claims.

9. A method for fastening an assembly (5) in an opening (1.1) of a wall of a vehicle (1) by means of a fastening device according to any one of the preceding claims.

## Revendications

1. Dispositif de fixation pour la fixation d'un sous-groupe (5) dans une ouverture (1.1) d'une paroi (1) d'un véhicule, le dispositif de fixation présentant les caractéristiques suivantes :
a) un élément porteur (2) destiné à venir en appui sur la paroi (1) ; et
b) un élément de retenue (3) avec au moins une aile de retenue (3.1) pour fixer le dispositif de fixation dans l'ouverture (1.1) de la paroi, l'élément de retenue (3) destiné à fixer le dispositif de fixation étant disposé en face de l'élément porteur (2) de façon à pouvoir tourner le long d'une course de rotation prédéfinie,
c) un élément d'étanchéité (4.1) étant disposé entre l'élément porteur (2) et l'élément de retenue (3),
d) et l'élément porteur (2) et/ou l'élément de retenue (3) et/ou l'élément d'étanchéité (4.1) étant constitués les uns par rapport aux autres de telle sorte
e) qu'il demeure un jeu (4.2) dans un premier tronçon de la course de rotation, et cela soit :
e1) entre l'élément porteur (2) et l'élément d'étanchéité (4.1) ou
e2) l'élément de retenue (3) et l'élément d'étanchéité (4.1) ou
e3) entre l'élément porteur (2) et l'élément d'étanchéité (4.1) sur un côté du joint d'étanchéité et l'élément de retenue (3) et l'élément d'étanchéité (4.1) sur l'autre côté du joint d'étanchéité
f) au moins à l'extrémité de la course de rotation, l'élément porteur (2) et/ou l'élément de retenue (3) se déplace ou se déplacent par rapport à l'élément d'étanchéité (4.1) de telle sorte que le jeu (4.2) est fermé et que l'élément d'étanchéité (4.1) est comprimé de façon étanche entre l'élément porteur (2) et l'élément de retenue (3), et cela du fait que
f1) l'élément porteur (2) et l'élément de retenue (3) présentent des tronçons de bord (2.4, 3.2.4) formés l'un par rapport à l'autre sur lesquels l'élément porteur (2) et l'élément de retenue (3) se touchent pendant la course de rotation, et
f2) les tronçons de bord présentent, dans un premier tronçon de la course de rotation dans la zone de l'élément d'étanchéité (4.1), une première distance axiale (a1) entre l'élément porteur et l'élément de retenue, et cette première distance axiale est plus grande que la dimension axiale de l'élément d'étanchéité (a1>d), et
f3) une indentation (2.4.3) étant prévue dans la direction axiale à l'extrémité de la course de rotation au moins sur un des tronçons de bord de telle sorte que l'élément de retenue (3) se déplace dans la direction axiale par rapport à l'élément d'étanchéité (4.1) et de telle sorte que la deuxième distance axiale (a2) ainsi restante entre l'élément porteur (2) et l'élément de retenue (3) dans la zone de l'élément d'étanchéité (4.1) est plus petite que la dimension axiale de l'élément d'étanchéité (a2<d).

2. Dispositif de fixation selon la revendication 1, **caractérisé en ce que** l'aile ou respectivement les ailes de retenue (3.1) de l'élément de retenue agrippent par l'arrière la paroi (1) au moins à l'extrémité de la course de rotation et pressent l'élément de retenue (3), et par le biais de celui-ci, l'élément porteur (2) axialement contre la paroi (1).

3. Dispositif de fixation selon la revendication 2, **caractérisé en ce que**
a) sur l'élément porteur (2), il est prévu un deuxième élément d'étanchéité (2.2) vers la paroi (1) avec une élasticité dans la direction axiale, et
b) ce deuxième élément d'étanchéité (2.2) est pressé dans la direction axiale et, à l'extrémité de la course de rotation, est déchargé partiellement par le déplacement axial de l'élément de retenue (3),
c) sous l'action des ailes de retenue (3.1) de l'élément de retenue, l'élément de retenue (3) et, par le biais de celui-ci, l'élément porteur (2) et, de nouveau par le biais de celui-ci, le deuxième élément d'étanchéité (2.2), sont encore pressés contre la paroi suffisamment loin pour que le deuxième élément d'étanchéité (2.2) rende lui aussi l'ouverture (1.1) étanche aux fluides.

4. Dispositif de fixation selon une des revendications précédentes, **caractérisé en ce qu'**une deuxième partie de la course de rotation est constituée encore avant l'extrémité de la course de rotation, à l'intérieur de celle-ci, l'aile de retenue (3.1) agrippe déjà par l'arrière la paroi (1) et serre le deuxième élément d'étanchéité (2.2) axialement contre la paroi (1).

5. Dispositif de fixation selon une des revendications précédentes, **caractérisé en ce que** l'élément porteur et/ou l'élément de retenue présentent au moins une unité de blocage qui est constituée pour retenir l'élément de retenue dans cette position une fois atteinte l'extrémité de la course de rotation.

6. Dispositif de fixation selon une des revendications précédentes, **caractérisé en ce que** les ailes de retenue (3.1), dans le sens de rotation vers la position extrême de la fixation, présentent dans la direction axiale une épaisseur croissante.

7. Dispositif de fixation selon une des revendications précédentes, **caractérisé en ce que**, sur l'élément porteur (2) et/ou sur l'élément de retenue (3), il est prévu au moins une déformation (2.5), placée devant dans la direction de l'élément d'étanchéité (4.1), qui pénètre dans l'élément d'étanchéité (4.1) à l'extrémité de la course de rotation dans la direction axiale.

8. Elément de capteur, en particulier capteur de pression d'air (5), avec un dispositif de fixation selon une des revendications précédentes.

9. Procédé de fixation d'un sous-groupe (5) dans une ouverture (1.1) d'une paroi (1) d'un véhicule au moyen d'un dispositif de fixation selon une des revendications précédentes.
